(19) Europäisches Patentamt
European Patent Office
Office européen des brevets

(11) Veröffentlichungsnummer: **0 300 331**
**A2**

(12) **EUROPÄISCHE PATENTANMELDUNG**

(21) Anmeldenummer: **88111109.0**

(51) Int. Cl.⁴: **C07F 9/52**

(22) Anmeldetag: **12.07.88**

(30) Priorität: **22.07.87 DE 3724238**

(43) Veröffentlichungstag der Anmeldung:
**25.01.89 Patentblatt 89/04**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hoelderich, Wolfgang, Dr.**
**Mannheimer Strasse 18 c**
**D-6710 Frankenthal(DE)**
Erfinder: **Hesse, Michael, Dr.**
**An der Froschlache 3**
**D-6700 Ludwigshafen(DE)**
Erfinder: **Schwarzmann, Matthias, Dr.**
**Carl-Bosch-Strasse 54**
**D-6703 Limburgerhof(DE)**

(54) **Verfahren zur Herstellung von Organophosphorverbindungen.**

(57) Die Anmeldung betrifft ein Verfahren zur Herstellung von Organophosphorverbindungen durch Umsetzung von ungesättigten Verbindungen, wie geradkettigen, verzweigten oder cyclischen Olefinen und Dienen mit konjugierten und nicht konjugierten Doppelbindungen mit Phosphinen, bei dem man Phosphin und/oder Phosphin-haltige Verbindungen an ungesättigte Verbindungen in Gegenwart von festen Heterogenkatalysatoren addiert. Als Heterogenkatalysatoren sind insbesondere Zeolithe und Phosphate geeignet.

EP 0 300 331 A2

## Verfahren zur Herstellung von Organophosphorverbindungen

Die Erfindung betrifft ein Verfahren zur Herstellung von Organophosphorverbindungen .

Für die Synthese von Organophosphorverbindungen existieren vielfältige Möglichkeiten. Beispielsweise läßt sich Triphenylphosphin durch Friedel-Crafts-Reaktion aus Benzol und Diphenylchlorphosphin herstellen (JP 59/116 387). Zur Synthese von Alkylphosphinen, insbesondere Methylphosphinen kann man weißen Phosphor mit tert. und sek. Aminen (DE 2 730 742) oder Phosphin mit tert. Amin und Alkylhalogenid (DE 2 727 390 und DE 2 407 461) oder weißen Phosphor mit Alkylhalogenid in Gegenwart von HCl (DE 2 255 395) umsetzen, wobei Gemische aus primären, sekundären und tertiären Phosphinen in mäßigen Ausbeuten erhalten werden. Die Umsetzung von Metallphosphiden mit Alkylhalogeniden (J. Org. Chem. 42, 3247 - 51 (1977) oder J. Inorg. Nucl. Chem. 35 (8), 2659, (1973)) oder Wasser (Inorg. Synthn. 16, 161 - 3 (1976)) bieten ebenso wie die Umsetzung von Tetraalkyldiphosphandisulfiden mit $LiAlH_4$ (z.B. Chem. Ber. 95, 64 (1962)) oder mit Tributylphosphin (Inorg. Synth. 21, 180 - 1 (1982)) die Möglichkeit, verschiedene Organophosphorverbindungen herzustellen. Mit der Michaelis-Arbuzow-Umlagerung (z.B. Inorg. Nucl. Chem. 31, 3684 (1969) lassen sich primäre Phosphine, vornehmlich Methylphosphin herstellen. Auch die Grignard-Reaktion von Triphenylphosphiten führt zu Alkylphosphinen (Syn. Reactiv. Inorg. Metal-Org. Chem. 4 (2), 149 (1974)).

Nachteile dieser bekannten Herstellungsverfahren sind, daß man meist über mehrere Reaktionsschritte die gewünschte Verbindungen oder ein Verbindungsgemisch, das sich nur schwer auftrennen läßt, erhält. Die Verwendung von weißem Phosphor als Einsatzstoff ist in der Handhabung problematisch, ebenso wie die von nicht wohlfeilen Metallphosphiden. Auch ist es bei den gängigen Verfahren recht schwierig, gemischt substituierte Phosphine zu synthetisieren.

Weiterhin ist bekannt, daß man Alkylphosphine aus $PH_3$ und aliphatischen Monoolefinen in Gegenwart von Peroxiden als Radikalbildner (DE-PS 899 040, US-PS 2 957 931) oder unter UV-Bestrahlung (J. Chem. Soc. 1083 (1963)) herstellen kann. Diese Verfahren sind auf die Herstellung von Alkylphosphinen nur in beschränktem Umfang anwendbar und dann nur mit mäßigen Ausbeuten.

Es bestand nun die Aufgabe, Organophosphorverbindungen aus wohlfeilen Einsatzstoffen durch einfache, in einem Reaktionsschritt ablaufende Synthese in hohen Ausbeuten zu synthetisieren. Auch sollte eine einfache Synthesemöglichkeit für gemischt substituierte Organophosphorverbindungen gefunden werden.

Gegenstand der Erfindung ist ein Verfahren zur Herstellung von Organophosphorverbindungen durch Umsetzung von ungesättigten Verbindungen, wie geradkettigen, verzweigten oder cyclischen Olefinen und Dienen mit konjugierten und nicht konjugierten Doppelbindungen mit Phosphinen, bei dem man Phosphin und/oder Phosphin-haltige Verbindungen an ungesättigte Verbindungen in Gegenwart von festen Heterogenkakatalysatoren addiert.

Im erfindungsgemäßen Verfahren werden die eingangs an die Reaktion gestellten Anforderungen erfüllt. Im Hinblick auf den Stand der Technik war das Gelingen des Verfahrens besonders überraschend, da man aufgrund der Empfindlichkeit der eingesetzten und erhaltenen Phosphorverbindungen gegenüber Sauerstoff, Temperatur etc. mit dem Gelingen der Reaktion nicht ohne weiteres und schon gar nicht mit solch hohen Umsätzen und Selektivitäten rechnen konnte. Auch die Möglichkeit, gemischt substituierte Organophosphorverbindungen zu synthetisieren, ist mit dem erfindungsgemäßen Verfahren in hervorragender Weise gegeben. Die an die eingesetzten Katalysatoren gestellten Anforderungen wie Lebensdauer, Standzeit, mechanische Stabilität, Aktivität und Selektivität werden sehr gut erfüllt. Dies ist umso überraschender, als man eine Reaktion der hochempfindlichen eingesetzten Phosphine mit dem Katalysator erwartet hätte.

Als ungesättigte Verbindungen verwendet man geradkettige, verzweigte oder cyclische Olefine und Diene mit konjugierten und nicht konjugierten Doppelbindungen.

Als Olefine können Isobutylen, Propylen, Ethylen, n-Buten, cis- und trans-Buten-2, Pentene, Methylbutene, Hexene, Methylpentene, Ethylbutene, Cyclopentene und Cyclohexene und als Diene, Isopren, Vinylcyclohexen, Hexadiene und Pentadiene eingesetzt werden.

Als phosphinhaltige Verbindungen kommen in Betracht: primäre und sekundäre Phosphine, Diphosphane, Polyphosphane und Organophosphoroxide.

Als primäre Phosphine kommen Verbindungen der Formel $H_2PR$ zum Einsatz, wobei R für geradkettige oder verzweigte Alkylreste mit 1 - 16 Kohlen stoffatomen, wie z.B. Methyl-, Ethyl-, Propyl-, Isopropyl-, n-, i-, t-Butyl-, Pentyl-, Hexyl-, Decenyl- und Dodecylreste oder cyclische Alkylreste mit 3 - 8 Kohlenstoffatomen wie z.B. Pentyl-, Hexy- und Heptylreste oder Arylreste bzw. Aralkylreste bzw. Alkylarylreste, die ihrerseits mit unter den gewählten Reaktionsbedingungen inerten Substituenten am aromatischen Kern substituiert sein können, wie z.B. Phenyl-, Benzyl-, Phenylethyl-, Mesityl-, Toluyl-, Xylolyl-, Ethylphenyl-, Propylphenyl-

und Phenylpropylreste oder Silylreste, wie z.B. Trimethylsilyl, Triethylsilyl-, Dimethylphenylsilyl-, Dimethylethylsilyl- und Dimethylpropyl-silylreste oder Aminreste, wie z.B. Dimethylamin-, Diethylamin-, Methylethylamin-, Methylpropyl- und Methylphenylaminreste oder Borylreste, wie z.B. Dimethylboryl-, Diethylboryl-, Methylpropylboryl- oder Methylphenylborylreste steht.

Als sekundäre Phosphine können Verbindungen der Formel $HPRR^1$ verwendet werden, wobei R und $R^1$ gleich oder verschieden sein und obige Bedeutung aufweisen können.

Als Diphosphane kann man Verbindungen der Formel $RR^1P-PR^1R$ umsetzen, wobei mindestens ein Rest Wasserstoff bedeutet und die übrigen Reste von R und $R^1$ gleich oder verschieden sein und obige Bedeutung aufweisen können. Es kommen aber auch Verbindungen mit 2-Phosphinoresten, die zwischen diesen Resten noch eine geradkettige oder verzweigte Kohlenstoffkette besitzen, in Frage.

Lineare und cyclische Polyphosphane, wie z.B. Triphosphane der Formel $RR^1P-PR-{}^PR^1R$, wobei mindestens ein Rest Wasserstoff bedeutet und die übrigen Reste obige Bedeutung haben können, sind als Ausgangsstoffe geeignet. Auch kann zwischen den einzelnen Phosphinoresten noch eine geradkettige oder verzweigte Kohlenstoffkette liegen.

Als Organophosphoroxide können Verbindungen der Formel $RR^1R^2P(O)$ nach dem Verfahren umgesetzt werden, wobei mindestens ein Rest Wasserstoff bedeutet und die übrigen Reste von R, $R^1$ oder $R^2$ gleich oder verschieden sein können und obige Bedeutung aufweisen können.

Als ungesättigte Verbindungen werden eingesetzt geradkettige oder verzweigte Olefine mit 1 - 16 Kohlenstoffatome, wie z.B. Ethylen, Propylen, n-Buten, cis-/trans-Buten-2, Isobuten, Pentene, Methylbutene, Hexene, Methylpentene, Ethylbutene, Ethyloctene, Dodecene, Phenylpropen, Styrol, Ethylstyrol und Isobutenylbenzol oder cyclische Olefine , wie z.B. Cyclopentene und Cyclohexene oder Di- bzw. Polyene mit konjugierten Doppelbindungen, wie z.B. Isopren, Vinylcyclohexen, Hexadiene, Pentadiene, Butadiene.

Die Reaktionen nach Gl. 1 und 2 veranschaulichen die Erfindung

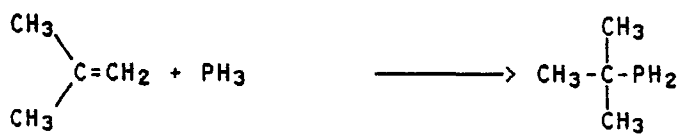

Gl. 1

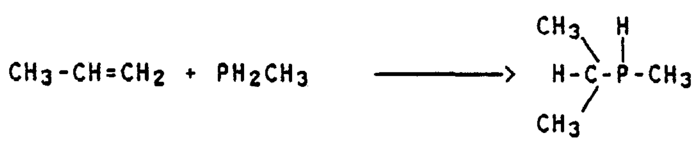

Gl. 2

Als Heterogen-Katalysatoren werden bei dem erfindungsgemäßen Verfahren vorzugsweise zeolithische Katalysatoren in acider Form eingesetzt. Zeolithe sind kristalline Aluminosilikate, die eine hochgeordnete Struktur mit einem starren dreidimensionalen Netzwerke von $SiO_4$- und $AlO_4$-Tetraedern besitzen, die durch gemeinsame Sauerstoffatome verbunden sind. Das Verhältnis der Si- und Al-Atome zu Sauerstoff beträgt 1 : 2 (s. Ullmanns Encyclopädie d. techn. Chemie, 4. Auflage, Band 24, Seite 575 (1983)). Die Elektrovalenz der Aluminium enthaltenden Tetraeder ist durch Einschluß von Kationen in den Kristall, z.B. eines Alkali- oder Wasserstoffions ausgeglichen. Ein Kationenaustausch ist möglich. Die Räume zwischen den Tetraedern sind vor der Dehydration durch Trocknen bzw. Calcinieren von Wassermolekülen besetzt.

In den Zeolithen können anstelle von Aluminium auch andere Elemente wie B, Ga, Fe, Cr, V, As, Sb, Bi oder Be oder deren Gemische in das Gitter eingebaut werden, oder das Silicium kann durch ein vierwertiges Element wie Ge, Ti, Zr, Hf ersetzt werden.

Entsprechend ihrer Struktur werden Zeolithe in verschiedene Gruppen unterteilt (s. Ullmanns Encyclopädie d. techn. Chemie, 4. Aufl., Bd. 24, S. 575 (1983)). So bilden bei der Mordenit-Gruppe Ketten oder bei der Chabasit-Gruppe Schichten aus Tetraedern die Zeolith-Struktur, während sich bei der Faujasit-Gruppe die Tetraeder zu Polyedern ordnen, z.B. in Form eines Kubooktaeders, der aus Vierringen bzw. Sechsringen aufgebaut ist. Je nach Verknüpfung der Kubooktaeder, wodurch unterschiedlich große Hohlräume und Poren entstehen, unterscheidet man in Zeolithe vom Typ A, L, X oder Y.

Für das erfindungsgemäße Verfahren kommen als Katalysatoren Zeolithe aus der Mordenit-Gruppe der engporigen Zeolithe vom Erionit- bzw. Chabasit-Typ oder Zeolithe vom Faujasit-Typ, z.B. Y-, X- oder L-Zeolithe in Betracht. In diese Gruppe von Zeolithen gehören auch die sogenannten "ultrastabilen" Zeolithe des Faujasittyps, d.h. dealuminierte Zeolithe. Verfahren zur Hersatellung solcher Zeolithe sind beschrieben in "Catalysis by Zeolites" Band 5 aus "Studies in Surface Science and Catalysis" ed. B. Imelik et. al. Elsevier Scientific Publishing Comp. 1980, S. 203 und "Crystal Structures of Ultra-stable Faujasites" Advances in Chemistry Series Nr. 101, American Chemical Society Washington, DC, S. 226 ff (1971) und in

US-PS 4 512 961.

Besonders vorteilhaft sind Zeolithe vom Pentasiltyp. Diese haben als Grundbaustein einen aus $SiO_4$-Tetraedern aufgebauten Fünfring gemeinsam. Sie sind durch ein hohes $SiO_2/Al_2O_3$-Verhältnis gekennzeichnet sowie durch Porengrößen, die zwischen denen der Zeolithe vom Typ X oder Y liegen (vgl. Ullmanns Encyclopädie d. techn. Chem., 4. Aufl., Bd. 24, 1983).

Diese Zeolithe können unterschiedlich chemische Zusammensetzung aufweisen. Es handelt sich hierbei um Alumino-, Boro-, Eisen-, Beryllium-, Gallium-, Chrom-, Arsen-, Antimon- und Wismutsilikatzeolithe oder deren Gemische sowie Alumino-, Boro-, Gallium- und Eisengermanatzeolithe oder deren Gemische. Insbesondere eignen sich die Alumino-, Boro- und Eisensilikatzeolithe des Pentasiltyps für das erfindungsgemäße Verfahren. Der Aluminosilikatzeolith wird z.B. aus einer Aluminiumverbindung, vorzugsweise $Al(OH)_3$ oder $Al_2(SO_4)_3$ und einer Siliciumkomponente, vorzugweise hochdispersem Siliciumdioxid in wäßriger Aminlösung, insbesondere in Polyaminen wie 1,6-Hexandiamin- oder 1,3-Propandiamin- oder Triethylentetramin-Lösung mit oder insbesondere ohne Alkali- oder insbesondere ohne Alkali- oder Erdalkalizusatz bei 100 bis 220 °C unter autogenem Druck hergestellt. Auch gehören hierzu die isotaktischen Zeolithe nach EP 34 727 und EP 46.504. Die erhaltenen Aluminosilkatzeolithe enthalten je nach Wahl der Einsatzstoffmengen ein $SiO_2/Al_2O_3$-Verhältnis von 10 bis 40 000. Auch lassen sich derartige Aluminosilkatzeolithe in etherischem Medium wie Diethylenglykoldimethylether, in alkoholischem Medium wie Methanol bzw. 1,4-Butandiol oder in Wasser synthetisieren.

Borosilikatzeolithe kann man z.B. bei 90 bis 200 °C unter autogenem Druck synthetisieren, indem man eine Borverbindung z.B. $H_3BO_3$, mit einer Siliciumverbindung, vorzugsweise hochdispersem Siliciumdioxid in wäßriger Aminlösung, insbesondere in 1,6-Hexandiamin- oder 1,3-Propandiamin- oder Triethylentetramin-Lösung mit und insbesondere ohne Alkali- oder Erdalkalizusatz zur Reaktion bringt. Hierzu gehören auch die isotaktischen Zeolithe nach EP 34 727 und EP 46 504. Solche Borosilikatzeolithe können ebenfalls hergestellt werden, wenn man die Reaktion statt in wäßriger Aminlösung in etherischer Lösung, z.B. Diethylenglykoldimethylether oder in alkoholischer Lösung, z.B. 1,6-Hexandiol durchführt.

Den Eisensilikatzeolith erhält man z.B. aus einer Eisenverbindung, vorzugsweise $Fe_2(SO_4)_3$ und einer Siliciumverbindung, vorzugsweise hochdispersem Siliciumdioxid in wäßriger Aminlösung, insbesondere 1,6-Hexandiamin, mit oder ohne Alkali- oder Erdalkalizusatz bei 100 bis 220 °C unter autogenem Druck.

Zu den verwendbaren siliciumreichen Zeolithen ($SiO_2/Al_2O_3 \geq 10$) gehören auch Zeolithe vom ZSM-Typ, Ferrierit, NU-1 und Silicalit®.

Die so hergestellten Alumino-, Boro- und Eisensilikatzeolithe können nach ihrer Isolierung, Trocknung bei 100 bis 160 °C , vorzugsweise 110 °C und Calcinierung bei 450 bis 550 °C, mit einem Bindemittel im Verhältnis 90 : 10 bis 40 : 60 Gew.% zu Strängen oder Tabletten verformt werden. Als Bindemittel eignen sich diverse Aluminiumoxide, bevorzugt Boehmit, amorphe Aluminosilikate mit einem $SiO_2/Al_2O_3$-Verhältnis von 25 : 75 bis 90 : 5, bevorzugt 75 : 25, Siliciumdioxid, bevorzugt hochdisperses $SiO_2$, Gemische aus hochdispersem $SiO_2$ und hochdispersem $Al_2O_3$, $TiO_2$, $ZrO_2$ sowie Ton. Nach der Verformung werden die Extrudate oder Preßlinge bei 110 °C /16 h getrocknet und bei 500 °C /16 h calciniert.

Man erhält auch sehr wirksame Katalysatoren, wenn der isolierte Alumino- bzw. Borosilikatzeolith direkt nach der Trocknung verformt wird und erst nach der Verformung einer Calcinierung unterworfen wird. Die hergestellten Alumino- und Borosilikatzeolithe können in reiner Form, ohne Binder, als Stränge oder Tabletten eingesetzt werden, wobei als Verstrangungs- oder Peptisierungshilfmittel, z.B. Ethylcellulose, Stearinsäure, Kartoffelstärke, Ameisensäure, Oxalsäure, Essigsäure, Salpetersäure, Ammoniak, Amine, Silikoester und Graphit oder deren Gemische verwendet werden.

Liegt der Zeolith aufgrund der Art seiner Herstellung nicht in der katalytisch aktiven, aciden H-Form vor, sondern z.B. in der Na-Form, dann kann diese durch Ionenaustausch z.B. mit Ammoniumionen und anschließende Calcinierung oder durch Behandlung mit Säuren vollkommen oder partiell in die gewünschte H-Form überführt werden.

Wenn bei der erfindungsgemäßen Verwendung der zeolithischen Katalysatoren eine durch Koksabscheidung bedingte Desaktivierung eintritt, empfiehlt es sich, die Zeolithe durch Abbrennen der Koksablagerung mit Luft oder mit einem Luft/$N_2$-Gemisch bei 400 bis 550 °C, bevorzugt 500 °C, zu regenerieren. Die Zeolithe erhalten dadurch ihre Anfangsaktivität zurück.

Durch partielle Verkokung (pre-coke) ist es möglich, die Aktivität des Katalysators für ein Selektivitätsoptimum des gewünschten Reaktionsproduktes einzustellen.

Um eine möglichst hohe Selektivität, hohen Umsatz sowie lange Standzeit zu erreichen, ist es vorteilhaft, die Zeolithe zu modifizieren. Eine geeignete Modifizierung der Katalysatoren besteht z.B. darin, daß man den unverformten oder verformten Zeolithen mit Metallsalzen durch einen Ionenaustausch oder durch Imprägnierung dotiert. Als Metalle werden Alkalimetalle wie Li, Cs, K, Erdalkalimetalle wie Mg, Ca, Sr, Metalle der 3., 4. und 5. Hauptgruppe wie Al, Ga, Ge, Sn, Pb, Bi, Übergangsmetalle der 4. bis 8.

Nebengruppe wie Ti, Zr, V, Nb, Cr, Mo, W, Mn, Re, Fe, Ru, Os, Co, Rh, Sr, Ni, Pd, Pt, Übergangsmetalle der 1. und 2. Nebengruppe wie Cu, Ag, Zn, seltene Erdmetalle wie La, Ce, Pr, Nd, Fr, Yb und U eingesetzt.

Zweckmäßigerweise führt man die Dotierung so durch, daß man z.B. den verformten Zeolithen in einem Steigrohr vorlegt und bei 20 bis 100 °C z.B. eine wäßrige oder ammoniakalische Lösung eines Halogenids oder eines Nitrats der voranbeschriebenen Metalle überleitet. Ein derartiger Ionenaustausch kann z.B. an der Wasserstoff-, Ammonium- und Alkaliform des Zeolithen vorgenommen werden. Eine weitere Möglichkeit der Metallaufbringung auf den Zeolithen ist gegeben, indem man das zeolithische Material z.B. mit einem Halogenid, einem Nitrat oder einem Oxid der voranbeschriebenen Metalle in wäßriger, alkoholischer oder ammoniakalischer Lösung imprägniert. Sowohl an einen Ionenaustausch als auch an eine Imprägnierung schließt sich zumindest eine Trocknung, wahlweise eine abermalige Calcinierung an.

Eine mögliche Ausführungsform besteht z.B. darin, daß man $Cu(NO_3)_2 \times 3\ H_2O$ oder $Ni(NO_3)_2 \times 6\ H_2O$ oder $Ce(NO_3)_3 \times 6\ H_2O$ oder $La(NO_3)_2 \times 6\ H_2O$ oder $Cs_2CO_3$ in Wasser löst. Mit dieser Lösung wird der verformte oder unverformte Zeolith eine gewisse Zeit, ca. 30 Minuten, getränkt. Die eventuell überstehende Lösung wird am Rotationsverdampfer von Wasser befreit. Danach wird der getränkte Zeolith bei etwa 150 °C getrocknet und bei etwa 550 °C calciniert. Dieser Tränkvorgang kann mehrmals hintereinander vorgenommen werden, um den gewünschten Metallgehalt einzustellen.

Es ist auch möglich, z.B. eine wäßrige $Ni(CO_3)_2$-Lösung oder ammoniakalische $Pd(NO_3)_2$-Lösung herzustellen und darin den reinen pulverförmigen Zeolithen bie 40 bis 100 °C unter Rühren etwa 24 h aufzuschlämmen. Nach Abfiltrieren, Trocknen bei etwa 150 °C und Calcinierung bei etwa 500 °C kann das so gewonnene zeolithische Material mit oder ohne Bindemittel zu Strängen, Pellets oder Wirbelgut weiterverarbeitet werden.

Ein Ionenaustausch des in der H-Form oder Ammonium-Form oder Alkali-Form vorliegenden Zeolithen kann so vorgenommen werden, daß man den Zeolithen in Strängen oder Pellets in einer Kolonne vorlegt und darüber z.B. eine wäßrige $Ni(NO_3)_2$-Lösung oder ammoniakalische $Pd(NO_3)_2$-Lösung bei leicht erhöhter Temperatur zwischen 30 und 80 °C im Kreislauf 15 bis 20 h leitet. Danach wird mit Wasser ausgewaschen, bei etwa 150 °C getrocknet und bei etwa 550 °C calciniert. Bei manchen metalldotierten Zeolithen z.B. Pd-, Cu-, Ni-dotierten Zeolithen ist eine Nachbehandlung mit Wasserstoff vorteilhaft.

Eine weitere Möglichkeit der Modifizierung besteht darin, daß man das zeolithische Material - verformt oder unverformt - einer Behandlung mit Säuren wie Salzsäure, Flußsäure und Phosphorsäure und/oder Wasserdampf unterwirft. Dabei geht man vorteilhaft so vor, daß man Zeolithe in Pulverform mit 1 n Phosphorsäure 1 Stunde bei 80 °C behandelt. Nach der Behandlung wird mit Wasser gewaschen, bei 110 °C/16 Stunden getrocknet und bei 500 °C /20 Stunden calciniert. Nach einer anderen Arbeitsweise behandelt man Zeolithe vor oder nach ihrer Verformung mit Bindemitteln, 1 bis 3 Stunden bei Temperaturen von 60 bis 80 °C mit einer 3 bis 25 Gew.%-igen wäßrigen Salzsäure. Anschließend wird der so behandelte Zeolith mit Wasser gewaschen, getrocknet und bei 400 °C bis 500 °C calciniert.

Eine besondere Ausführungsform für die Säurebehandlung besteht darin, daß man das zeolithische Material vor seiner Verformung bei erhöhter Temperatur mit Flußsäure, die im allgemeinen als 0,001 n bis 2 n, vorzugsweise 0,05 n bis 0,5 n Flußsäure eingesetzt wird, behandelt, beispielsweise durch Erhitzen unter Rückfluß über einen Zeitraum von 0,5 bis 5, vorzugsweise 1 bis 3 Stunden. Nach Isolierung, z.B. durch Abfiltrieren und Auswaschen, des zeolithischen Materials wird dieses zweckmäßig bei Temperaturen von 100 bis 160 °C, getrocknet und bei Temperaturen von 450 °C bis 600 °C calciniert. Gemäß einer anderen Ausführungsform kann das zeolithische Material nach einer Verformung mit Bindemittel bei erhöhter Temperatur, z.B. bei 50 °C bis 90 °C , vorzugsweise 60 °C bis 80 °C, über einen Zeitraum von 0,5 bis 5, mit 12 bis 20 Gew.%-iger Salzsäure, behandelt werden. Anschließend wird das zeolithische Material im allgemeinen ausgewaschen und bei Temperaturen von 100 bis 160 °C, getrocknet und bei Temperaturen von 450 bis 600 °C calciniert. Einer HF-Behandlung kann sich auch eine HCl-Behandlung anschließen.

Nach einer anderen Arbeitsweise kann man Zeolithe durch Aufbringen von Phosphorverbindungen, wie Trimethoxiphosphat, Trimethoxiphosphin, primärem, sekundärem oder tertiärem Natriumphosphat modifizieren. Besonders vorteilhaft hat sich die Behandlung mit primärem Natriumphosphat erwiesen. Hierbei werden die Zeolithe in Strang-, Tabletten- oder Wirbelgut-Form mit wäßriger $NaH_2PO_4$-Lösung getränkt, bei 110 °C getrocknet und bei 500 °C calciniert.

Weitere Heterogen-Katalysatoren für das erfindungsgemäße Verfahren sind Phosphate, insbesondere Aluminiumphosphate, Siliciumaluminiumphosphate, Siliciumeisenaluminiumphosphat, Cerphosphat, Zirkonphosphate, Borphosphat, Eisenphosphat oder deren Gemische.

Als Aluminiumphosphat-Katalysatoren werden für das erfindungsgemäße Verfahren insbesondere unter hydrothermalen Bedingungen synthetisierte Aluminiumphosphate eingesetzt.

Die unter hydrothermalen Bedingungen hergestellten Aluminiumphosphate sind z.B. APO-5, APO-9, APO-11, APO-12, APO-14, APO-21, APO-25, APO-31 und APO-33. Synthesen dieser Verbindungen sind in

EP 132 708, US 4 310 440, US 4 473 663 beschrieben.

Beispielsweise $AlPO_4$-5 (APO-5) wird synthetisiert, indem man Orthophosphorsäure mit Pseudoboehmit (Catapal SB®) in Wasser homogen mischt, zu dieser Mischung Tetrapropylammoniumhydroxid gibt und danach bei etwa 150 °C 20 bis 60 h unter autogenem Druck in einem Autoklaven umsetzt. Das abfiltrierte $AlPO_4$ wird getrocknet bei 100 bis 160 °C und calciniert bei 450 bis 550 °C .

$AlPO_4$-9 (APO-9) wird ebenfalls aus Orthophosphorsäure und Pseudoboehmit aber in wäßriger DABCO-Lösung (1,4-Diazabicyclo-(2,2,2)octan) bei ca. 200 °C unter autogenem Druck während 200 bis 400 h synthetisiert.

Die Synthese des $AlPO_4$-21 (APO-21) erfolgt aus Orthophosphorsäure und Pseudoboehmit in wäßriger Pyrrolidon-Lösung bei 150 bis 200 °C unter autogenem Druck während 50 bis 200 h.

Die für das erfindungsgemäße Verfahren eingesetzten Siliciumaluminiumphosphate sind z.B. SAPO-5, SAPO-11, SAPO-31 und SAPO-34. Die Synthese dieser Verbindung wird z.B. in EP 103 117, US 4 440 871 beschrieben. SAPO's werden hergestellt durch Kristallisation aus wäßriger Mischung bei 100 bis 250 °C und autogenem Druck während 2 h bis 2 Wochen, wobei die Reaktionsmischung aus einer Silicium-, Aluminium- und Phosphorkomponente in wäßrigen aminoorganischen Lösungen umgesetzt wird.

SAPO-5 beispielsweise wird durch Mischen von $SiO_2$ suspendiert in wäßriger Tetrapropylammoniumhydroxid-Lösung mit einer wäßrigen Suspension aus Pseudoboehmit und Orthophosphorsäure und anschließende Umsetzung bei 150 bis 200 °C während 20 bis 200 h unter autogenem Druck in einem Rührautoklaven erhalten. Die Trocknung des abfiltrierten Pulvers erfolgt bei 110 bis 160 °C und die Calcination bei 450 bis 550 °C.

Als Phosphatkatalysatoren kann man bei dem Verfahren auch gefällte Aluminiumphosphate einsetzen. Beispielsweise wird ein derartiges Aluminiumphosphat hergestellt, indem 92 g Diammoniumhydrogenphosphat in 700 ml Wasser gelöst werden. Zu dieser Lösung wird 260 g $Al(NO_3)_3$ x $H_2O$ in 700 ml Wasser über 2 h zugetropft. Dabei wird der PH-Wert durch gleichzeitige Zugabe von 25 %iger $NH_3$-Lösung bei pH 8 gehalten. Der entstandene Niederschlag wird 12 h nachgerührt, dann abgesaugt und ausgewaschen. Er wird bei 60 °C /16 h getrocknet.

Borphosphate für das erfindungsgemäße Verfahren lassen sich beispielsweise durch Mischen und Kneten von konzentrierter Borsäure und Phosphorsäure und durch anschließende Trocknung und Calcination in Inertgas-, Luft- oder Dampfatmosphäre bei 250 bis 650 °C, vorzugsweise 300 bis 500 °C herstellen.

Auf diese Phosphate können durch Imprägnierung (Tränken und Aufsprühen) oder in manchen Fällen auch durch Ionenaustausch Modifizierungskomponenten, wie voran bei den Zeolithen beschrieben, aufgebracht werden. Auch kann wie bei den Zeolithkatalysatoren eine Modifizierung mit Säuren erfolgen.

Die hier beschriebenen Katalysatoren können wahlweise als 2- bis 4-mm-Stränge oder als Tabletten mit 3 bis 5 mm Durchmesser oder als Splitt mit Teilchengrößen von 0,1 bis 0,5 mm oder als Wirbelkontakt eingesetzt werden.

Die erfindungsgemäße Umsetzung wird bevorzugt in der Gasphase oder im überkritischen Bereich von 100 bis 500 °C, insbesondere bei 200 bis 400 °C, und einer Belastung WHSV = 0,1 bis 20 $h^{-1}$, bevorzugt 0,5 bis 5 $h^{-1}$ (g Ausgangsstoff/g Katalysator und Stunde) ausgeführt. Das molare Verhältnis zwischen ungesättigter organischer Verbindung und pH-haltiger Phosphorverbindungen beträgt 6 : 1 bis 1 : 20, bevorzugt 3 : 1 bis 1 : 5. Die Reaktion kann in einem Festbett oder auch im Wirbelbett ausgeführt werden.

Es ist auch möglich, die Reaktion in der Flüssigphase (Suspension-, Riesel- oder Sumpffahrweise) bei Temperaturen zwischen -20 und 200 °C durchzuführen.

Das Verfahren wird je nach Flüchtigkeit der Ausgangsverbindung bei Normaldruck oder bei Drücken zwischen 0,5 und 500 bar und vorzugsweise kontinuierlich durchgeführt. Die Durchführung kann aber auch diskontinuierlich erfolgen.

Schwerflüchtige oder feste Ausgangsstoffe werden in gelöster Form, z.B. in THF-, Toluol- oder Petrolether-Lösung zum Einsatz gebracht. Generell ist eine Verdünnung des Ausgangsstoffes mit derartigen Lösungsmitteln oder mit Inertgasen wie $N_2$, Ar und $H_2O$-Dampf möglich.

Nach der Umsetzung werden die entstandenen Produkte durch übliche Verfahren, z.B. durch Destillation aus dem Reaktionsgemisch, isoliert; nichtumgesetzte Ausgangsstoffe werden gegebenenfalls in die Umsetzung zurückgeführt.

Besonders zweckmäßig ist es das gasförmige Reaktionsgemisch sofort in eine Trennanalyse einzubringen und anschließend in die Einzelkomponenten zu zerlegen. Eine derartige Trennung kann z.B. in einer Fraktionierkolonne durchgeführt werden.

Die folgenden Beispiele veranschaulichen die Erfindung.

Beispiel 1-20

Die Reaktion wird unter isothermen Bedingungen in einem Metallautoklaven oder in Glasampullen durchgeführt. Die Reaktionsprodukte werden durch übliche Methoden, z.B. an einer Hochvakuumapparatur aufgetrennt und durch IR-, NMR- und MS-Spektroskopie charakterisiert. Die quantitative Bestimmung der Reaktionsprodukte und der Ausgangsprodukte erfolgt gaschromatographisch bzw. durch Auswaage. Bei den nachstehenden Versuchen wurden die Ansätze so gewählt, daß sich in der Glasampulle 75 mmol des Einsatzgemisches befanden. Daraus ergab sich ein Reaktionsdruck von 8 bar bei 100 °C und von 190 bar bei 200 °C.

Die für das erfindungsgemäße Verfahren eingesetzten Katalysatoren sind:

Katalysator A

Der Borosilikatzeolith des Pentasil-Typs wird in einer hydrothermalen Synthese aus 640 g hochdispersem $SiO_2$, 122 g $H_3BO_3$, 8 000 g einer wäßrigen 1,6-Hexandiamin-Lösung (Mischung 50 : 50 Gew.%) bei 170 °C unter autogenem Druck in einem Rührautoklaven hergestellt. Nach Abfiltrieren und Auswaschen wird das kristalline Reaktionsprodukt bei 100 °C /24 h getrocknet und bei 500 °C /24 h calciniert. Dieser Borosilikatzeolith setzt sich zusammen aus 94,2 Gew.% $SiO_2$ und 2,3 Gew.% $B_2O_3$.

Mit diesem Material werden durch Verformen mit einem Verformungshilfsmittel 2-mm-Stränge hergestellt, die bei 110 °C /16 h getrocknet und bei 500 °C /24 h calciniert werden.

Katalysator B

Ein Aluminosilikatzeolith vom Pentasil-Typ wird unter hydrothermalen Bedingungen bei autogenem Druck und 150 °C aus 65 g hochdispersem $SiO_2$, 20,3 gh $Al_2(SO_4)_3$ x 18 $H_2O$ in 1 kg einer wäßrigen 1,6-Hexandiamin-Lösung (Mischung 50 : 50 Gew.%) in einem Rührautoklaven hergestellt. Nach Abfiltrieren und Auswaschen wird das kristalline Reaktionsprodukt bei 110 °C /24 h getrocknet und bei 500 °C /24 h calciniert. Dieser Aluminosilikatzeolith enthält 91,6 Gew.% $SiO_2$ und 4,6 Gew.% $Al_2O_3$. Der Katalysator wird mit einem Verformungshilfsmittel zu 2-mm-Strängen verformt, bei 110 °C /16 h getrocknet und bei 500 °C /24 h calciniert.

Katalysator C

Katalysator C wird erhalten, indem man die Stränge des Katalysators A mit einer wäßrigen $Cr(NO_3)_3$-Lösung imprägniert, danach bei 130 °C /2 h trocknet und bei 540 °C /2 h calciniert. Der Cr-Gehalt beträgt 1,9 Gew.%.

Katalysator D

Der Eisensilikatzeolith des Pentasil-Typs wird unter hydrothermalen Bedingungen bei autogenem Druck und 165 °C aus 273 g Wasserglas, gelöst in 253 g einer wäßrigen 1,6-Hexandiamin-Lösung (Mischung 50 : 50 Gew.%) und 31 g Eisensulfat, gelöst in 21 g 96%iger Schwefelsäure und 425 g Wasser in einem Rührautoklaven während 4 Tagen synthetisiert. Der gebildete Zeolith wird abfiltriert, ausgewaschen, bei 110 °C /24 h getrocknet und bei 500 °C/24 h calciniert. Man erhält einen Eisensilikatzeolithen mit einem $SiO_2/Fe_2O_3$-Verhältnis von 17,7 und einen $Na_2O$-Gehalt von 1,2 Gew.%. Der Katalysator wird mit hochdispersem $SiO_2$ im Gewichtsverhältnis 70 : 30 zu 2,5-mm-Strängen verstrangt, bei 110 °C/16 h getrocknet und bei 500 °C/24 h calciniert. Diese Stränge werden mit einer 20%igen $NH_4Cl$-Lösung bei 80 °C ionenausgetauscht und danach chloridfrei gewaschen, bei 110 °C getrocknet und bei 500 °C/5 h calciniert. Der Ionenaustausch wird so lange vorgenommen, bis der Na-Gehalt 0,002 Gew.% beträgt.

Katalysator E

Katalysator E wird wie Katalysator C hergestellt, wobei jedoch $Cr(NO_3)_3$ durch $Ce(NO_3)_3$ ersetzt wird. Der Ce-Gehalt beträgt 1,7 Gew.%.

Katalysator F

Siliciumaluminiumphosphat-5 (SAPO-5) wird hergestellt aus einer Mischung aus 200 g 98%iger Phosphorsäure, 136 g Boehmit, 60 g Kieselsol (30%ig) 287 g Tripropylamin und 587 g $H_2O$. Diese Mischung wird bei 150 °C während 168 Std. unter autogenem Druck umgesetzt. Nach Filtration wird das kristalline Produkt bei 120 °C getrocknet und bei 500 °C calciniert. SAPO-5 enthält 49,8 Gew.% $P_2O_5$, 33,0 Gew.% $Al_2O_3$, 6,2 Gew.% $SiO_2$. SAPO-5 wird mit einem Verstrangungshilfsmittel zu 3-mm-Strängen verformt, bei 120 °C getrocknet und bei 500 °C calciniert.

Katalysator G

Kommerziell erhältliches Zirkonphosphat $Zr_3(PO_4)_4$ in Reinsubstanz verformt.

Katalysator H

$BPO_4$ wird hergestellt, indem man 49 g $H_3BO_4$ mit 117 g $H_3PO_4$ (75%ig) in einem Kneter zusammengibt, überschüssiges Wasser abdampft und das Umsetzungsprodukt zu 3-mm-Strängen verformt. Diese Stränge werden bei 100 °C getrocknet und bei 350 °C calciniert. Katalysator H enthält 8,77 Gew.% B und 28,3 Gew.% P.

Die mit diesen Katalysatoren erzielten Versuchsergebnisse und Versuchsbedingungen sind in Tabelle 1 zusammengefaßt. 100 °C getrocknet und bei 350 °C calciniert. Katalysator H enthält 8,77 Gew.% B und 28,3 Gew.% P.

Die mit diesen Katalysatoren erzielten Versuchsergebnisse und Versuchsbedingungen sind in Tabelle 1 zusammengefaßt.

Tabelle 1

| Beispiel | Katalysator | Edukt I | Edukt II | I/II molar | Temperatur [°C] | Produkt | Umsatz [%] | Selektivität [%] |
|---|---|---|---|---|---|---|---|---|
| 1 | A | $PH_3$ | 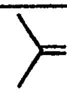 | 2 : 1 | 200 | 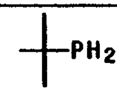 | 62 | 85 |
| 2 | A | " | " | " | 100 | " | 42 | 98 |
| 3 | C | " | " | " | 200 | " | 70 | 90 |
| 4 | B | " | " | " | 100 | " | 15 | 95 |
| 5 | D | " | " | " | 100 | " | 32 | 83 |
| 6 | A | $H_3CPH_2$ | " | " | 100 | 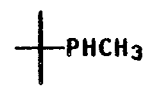 | 41 | 92 |
| 7 | B | " | " | " | 100 | " | 39 | 91 |
| 8 | E | " | " | " | 100 | " | 21 | 70 |
| 9 | C | " | " | 1 : 3 | 100 | " | 20 | 89 |
| 10 | C | $PH_3$ | 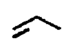 | 1 : 1 | 200 | 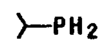 | 16 | 84 |
| 11 | C | $H_3CPH_2$ | " | 1 : 4 | 200 | 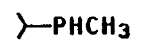 | 18 | 85 |
| 12 | C | $PH_3$ | $C_2H_4$ | 1 : 1 | 200 | $C_2H_5PH_2$ | 7 | 80 |

Tabelle 1 Forts.

| Beispiel | Katalysator | Edukt I | Edukt II | I/II molar | Temperatur [°C] | Produkt | Umsatz [%] | Selektivität [%] |
|---|---|---|---|---|---|---|---|---|
| 13 | C | $PH_3$ | 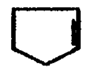 | 2 : 1 | 100 | 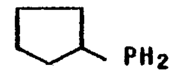 | 10 | 85 |
| 14 | C | " | 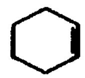 | 2 : 1 | 100 | 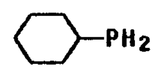 | 12 | 81 |
| 15 | C | " | 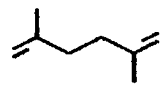 | 2 : 1 | 100 | 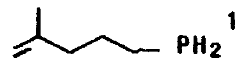 1) | 19 | 79 |
| 16 | C | " | 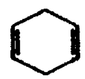 | 2 : 1 | 100 | 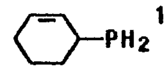 1) | 20 | 75 |
| 17 | F | " | 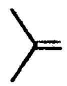 | 2 : 1 | 100 | 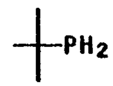 | 15 | 87 |
| 18 | G | " | " | 2 : 1 | 100 | " | 18 | 78 |
| 19 | H | " | " | 2 : 1 | 100 | " | 25 | 82 |
| 20 | H | $CH_3PH_2$ | " | 2 : 1 | 100 | 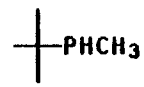 | 7 | 71 |

1) inklusive aller Isomere

## Ansprüche

1. Verfahren zur Herstellung von Organophosphorverbindungen durch Umsetzung von ungesättigten Verbindungen, wie geradkettigen, verzweigten oder cyclischen Olefinen und Dienen mit konjugierten und nicht konjugierten Doppelbindungen, dadurch gekennzeichnet, daß man Phosphin und/oder Phosphinhaltige Verbindungen an olefinisch ungesättigte Verbindungen in Gegenwart von festen Heterogenkatalysatoren addiert.

2. Verfahren nach Anspruch 1, dadurch gekennzeichnet, daß man die Katalysatoren in der aciden Form anwendet.

3. Verfahren nach Anspruch 1 und 2, dadurch gekennzeichnet, daß man als Heterogenkatalysator Zeolithe und/oder Phosphate und/oder Metalloxide verwendet.

4. Verfahren nach Anspruch 1 bis 3, dadurch gekennzeichnet, daß man als Katalysatoren Zeolithe des Pentasiltyps verwendet.

5. Verfahren nach Anspruch 1 bis 4, dadurch gekennzeichnet, daß man als Katalysatoren Aluminiumsilikatzeolithe und/oder Borosilikatzeolithe und/oder Eisensilikatzeolithe des Pentasiltyps verwendet.

6. Verfahren nach Anspruch 1 bis 4, dadurch gekennzeichnet, daß man als Katalysatoren Zeolithe des Faujasittyps verwendet.

7. Verfahren nach Anspruch 1 bis 6, dadurch gekennzeichnet, daß man mit Alkalimetallen, Übergangsmetallen, Seltenen Erdmetallen dotierte Zeolithe als Katalysatoren verwendet.

8. Verfahren nach Anspruch 1, dadurch gekennzeichnet, daß man als Heterogenkatalysator Phosphate verwendet.

9. Verfahren nach Anspruch 1 und 8, dadurch gekennzeichnet, daß man als Katalysatoren hydrothermal hergestellte Phosphate der Elemente B, Al, Zr, Ce, Fe, Sr oder deren Gemische verwendet.

10. Verfahren nach Anspruch 1, 8 und 9, dadurch gekennzeichnet, daß man als Katalysatoren hydrothermal hergestellte Aluminiumphosphate, Siliciumaluminiumphosphate, Siliciumeisenaluminiumphosphate und Boraluminiumphosphate verwendet.

11. Verfahren nach Anspruch 1 bis 10, dadurch gekennzeichnet, daß man die Reaktion in der Gasphase oder im überkritischen Bereich durchführt.